Europäisches Patentamt

European Patent Office

Office européen des brevets

(11) Numéro de publication: **0 018 701**
A1

# (12) DEMANDE DE BREVET EUROPEEN

(21) Numéro de dépôt: 80200428.3

(22) Date de dépôt: 06.05.80

(51) Int. Cl.³: **B 65 B 51/00**
A 23 G 3/00, A 23 G 7/00

(30) Priorité: 07.05.79 BE 195024

(43) Date de publication de la demande:
12.11.80 Bulletin 80/23

(84) Etats Contractants Désignés:
AT CH DE FR GB IT LI LU NL SE

(71) Demandeur: Aquarius, Coenrardus Hubertus
Heilig Wammesstraat 24
B-3680 Maaseik(BE)

(72) Inventeur: Aquarius, Coenrardus Hubertus
Heilig Wammesstraat 24
B-3680 Maaseik(BE)

(74) Mandataire: De Rycker, Rudolf, Ir. et al,
Vereenigde Octrooibureaux Belgie S.A. Charlottalei 48
B-2000 Antwerpen(BE)

(54) Procédé pour la fabrication d'une sucette emballée avec bâtonnet et sucette ainsi fabriquée.

(57) Au lieu d'introduire lors du façonnage d'une sucette un bâtonnet préfabriqué dans le morceau de sucrerie (1) et d'emballer ensuite le morceau (1) et une partie du bâtonnet par une feuille d'emballage (12), on enroule la feuille d'emballage (12) directement autour du morceau de sucrerie (1) façonné sans bâtonnet, et on façonne par torsion la feuille (12) elle-même en un bâtonnet (13).

A l'endroit où le bâtonnet (13) rencontre le morceau (1) on applique un adhésif du genre utilisé pour les sucreries au morceau (1). Un fil (9) agencé dans la feuille (12) facilite la déchirure de la feuille (12) pour consommer le morceau (1) qui reste adhéré au bâtonnet (13) formé par la feuille d'emballage (12) elle-même.

Fig.1

- 1 -

"Procédé pour la fabrication d'une sucette emballée avec bâtonnet et sucette ainsi fabriquée".

L'invention est relative à un procédé pour la fabrication d'une sucette emballée avec bâtonnet, suivant lequel on façonne dans une machine de façonnage, une certaine quantité de matière de sucette en un morceau de la forme désirée, après quoi on enroule ce morceau dans une feuille d'emballage.

Dans les procédés connus de ce genre, on enfonce à l'aide d'un dispositif à bâtonnets monté dans ou sur la machine de façonnage, un bâtonnet dans le morceau de sucrerie déjà façonné mais pas encore complètement durci. La mise en oeuvre de ces procédés connus exige donc un mécanisme supplémentaire qui augmente le prix de revient d'une machine de façonnage complète. Ce mécanisme supplémentaire peut en outre provoquer des perturbations, ce qui signifie une réduction de production et éventuellement des pertes de matière première, par exemple lorsque dans certains morceaux de matière de sucette, on n'introduit pas de bâtonnet ou un bâtonnet cassé. Un autre inconvénient très important de ces procédés connus réside dans le prix de revient des bâtonnets qui sont faits de matière synthétique, de bois ou de papier, et peuvent constituer une relativement grande proportion du prix de revient de la sucette.

L'invention a pour but d'éliminer ces inconvénients et d'offrir un procédé pour la fabrication d'une sucette emballée avec bâtonnet, avec lequel on peut produire d'une façon très économique, une sucette emballée dotée d'un bâtonnet, sans mécanisme auxiliaire d'introduction de bâtonnets et sans faire usage de bâtonnets

- 2 -

onéreux.

A cette fin, on enroule la feuille d'emballage directement autour du morceau de matière de sucette façonné dans la machine de façonnage, sans bâtonnet, et on façonne la feuille elle-même par torsion, en un bâ- tonnet, tandis que sur au moins l'un des éléments formés par le morceau de matière de sucette et la feuille d'emballage, à l'endroit où la tige formée par la feuille doit venir faire face au morceau de matière de sucette, on applique un adhésif du genre utilisé pour des sucreries, afin qu'après l'enlèvement de la partie de la feuille d'emballage qui entoure le morceau au voisinage du bâtonnet façonné, la partie de la feuille qui forme ce bâtonnet continue à adhérer au morceau de matière de sucette.

L'opération d'introduction d'un bâtonnet dans la machine de façonnage est totalement évitée. Etant donné qu'avec les procédés connus on doit de toute manière disposer une feuille d'emballage autour de la sucette, feuille qui est tordue autour du bâtonnet déjà en place, les machines mises en oeuvre pour ces procédés connus peuvent être utilisées ou en tout cas être facilement adaptées pour l'application du procédé suivant l'invention, de telle sorte donc que pour l'emballage et le façonnage d'un bâtonnet suivant l'invention, il ne faut pas plus de temps que pour l'emballage seul avec les procédés connus.

Dans une forme de réalisation particulière de l'invention, on colle la partie de la feuille d'emballage façonnée par torsion en un bâtonnet, de telle sorte qu'on obtient un bâtonnet relativement rigide.

Utilement on utilise comme feuille d'emballage, une feuille qui adhère elle-même au moins partiellement sous l'effet de la chaleur et on colle la feuille sous forme d'un bâtonnet par échauffement.

De telles feuilles d'emballage sont connues commercialement et sont en général dénommées matière "heat sealing".

Dans une forme de réalisation avantageuse de l'invention, on découpe la feuille d'emballage dans une bande.

Dans une forme de réalisation particulière de l'invention, on utilise comme adhésif, une colle au sucre.

Dans une forme de réalisation préférée de l'invention, on dote la feuille d'emballage au moins sur sa partie devant venir en contact avec la matière de sucette au voisinage de la tige, de moyens pour faciliter la déchirure de cette feuille.

Utilement ces moyens sont formés par un fil au moins partiellement visible qui est agencé dans la feuille d'emballage.

L'invention concerne aussi une sucette emballée avec bâtonnet obtenue par le procédé suivant l'une des formes de réalisation décrites ci-devant.

D'autres détails et particularités de l'invention ressortiront de la description ci-après d'un procédé pour la fabrication d'une sucette emballée avec bâtonnet et d'une sucette ainsi obtenue, suivant l'invention; cette description est uniquement donnée à titre d'exemple non limitatif et en se référant aux dessins annexés, dans lesquels :

La figure 1 est une vue en coupe schématique d'une installation utilisée pour la mise en oeuvre du procédé suivant l'invention.

La figure 2 est une vue en plan de dessus du ruban d'emballage utilisée pour l'application du procédé suivant l'invention dans l'installation suivant la figure 1.

- 4 -

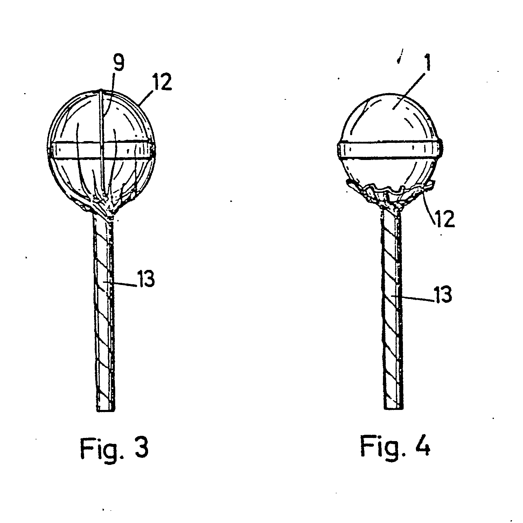

La figure 3 est une vue en élévation latérale d'une sucette obtenue par le procédé suivant l'invention.

La figure 4 est une vue en élévation latérale de la sucette suivant la figure 3 mais avec l'emballage partiellement éliminé pour pouvoir consommer le morceau de matière de sucette.

Dans les diverses figures, les mêmes références désignent des éléments semblables.

En premier lieu, en partant d'un tronçon de sucrerie, on prépare un morceau, à savoir une boule, de sucrerie sans bâtonnet. On peut utiliser dans ce but des machines existant dans le commerce pour le façonnage de sucettes, en éliminant cependant le dispositif d'introduction de bâtonnets qui fait en général partie d'une telle machine.

Les boules 1 qui sortent de la machine de façonnage, sont recueillies une à une sur des supports mobiles 2. Avant de recueillir la boule 1 dans un support 2, on applique sur le côté supérieur, en forme de cuvette, du support 2 une petite quantité de colle au sucre 3. La matière dont est fait le côté supérieur du support 2 est choisie de telle sorte que la colle au sucre n'y adhère pas mais adhère au contraire à la boule 1 qui est recueillie par ce support 2.

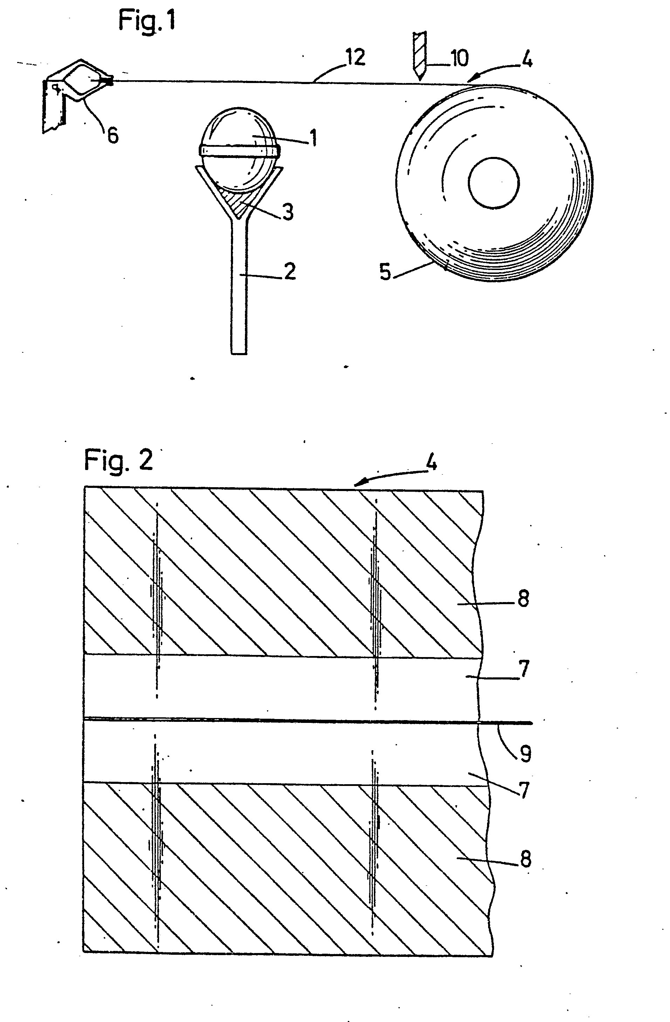

On déplace alors le support 2 qui peut par exemple faire partie d'une machine d'emballage, jusqu'en dessous d'une bande 4 de cellulose ou cellophane. On déroule cette bande 4 d'un rouleau freiné 5 à l'aide d'une pince mobile 6 qui peut saisir temporairement l'extrémité de la bande 4. Ainsi qu'il ressort en particulier de la figure 2, la bande 4 est divisée en trois zones, à savoir une zone médiane désignée à la figure 2 par la référence 7, qui est transparente, et de part et d'autre de celle-ci une zone colorée 8.

Dans la zone médiane 7 est encore incorporé sur toute la longueur de la bande 4, un fil rouge 9.

Lorsque le support 2 avec une boule 1 est amené en dessous la partie de la bande 4 tendue entre le rouleau 5 et la pince 6, on déplace alors ce support 2 vers le haut jusqu'à la rencontre avec la bande 4. Simultanément un couteau 10 découpe un morceau de la bande 4 et les mâchoires de la pince 6 s'ouvrent. De la même manière qu'avec les machines d'emballage connues pour sucettes, la feuille 12 ainsi découpée à partir de la bande 4 est saisie et enroulée autour de la boule 1. Cette dernière est alors maintenue temporairement, après quoi on fait redescendre le support 2.

Sur le côté de la boule 1 où a été appliquée la colle au sucre 3, on tord les extrémités de la feuille 12 en une tige. Cette partie de la feuille 12 qui est tordue en une tige, est collée sur elle-même pour former un bâtonnet 13. Dans ce but on peut doter les zones 8 de la bande 4 d'un adhésif approprié, mais il est plus simple d'utiliser une bande 4 à base de cellulose dont les zones 8 peuvent se coller entre elles sous l'action de la chaleur. De telles bandes de cellulose sont disponibles commercialement et connues sous le nom de "cellophane heat-sealing". Lors de la torsion en une tige, on chauffe donc les zones 8 de la bande 4 de telle sorte que l'on obtient finalement un bâtonnet 13 qui est relativement rigide et peut être comparé aux bâtonnets de papier pour sucettes disponibles commercialement.

A cause de la présence de la colle au sucre 3, la boule 1 est également collée à la partie de la feuille 12 qui est façonnée en un bâtonnet 13. Lorsque l'on enlève la partie de cette feuille 12 qui est en contact direct avec la boule 1 autour du bâtonnet 13, cette boule 1 reste cependant fixée au bâtonnet 13.

L'enlèvement de la partie de la feuille 12 qui est en contact avec la boule 1 peut se faire très aisément au moyen du fil rouge visible 9, qui forme un certain relief dans cette feuille 12 et donc peut être saisi avec les ongles des doigts.

La fourniture de la bande 4 et les déplacements des supports 2 peuvent être réalisés au moyen d'une machine d'emballage existante pour sucettes, légèrement modifiée. La construction d'une machine pour la réalisation des déplacements précités est évidente pour un technicien en la matière et ne sera donc pas décrite en détail ici.

Le morceau de matière de sucette ne doit pas nécessairement être formé par des sucreries. Ce morceau peut être constitué par n'importe quelle matière de sucette et par exemple aussi être fourré, par exemple avec une gomme à mâcher.

La forme du morceau de matière de sucette ne doit pas nécessairement être une boule. Ce morceau peut par exemple aussi être de forme ovale ou en disque.

Finalement la bande qui est utilisée pour l'emballage du morceau de matière de sucette et sert aussi à former le bâtonnet ne doit pas nécessairement être à base de cellulose. Il peut aussi s'agir de papier ordinaire, mais dans ce cas on doit utiliser naturellement des adhésifs appropriés pour façonner par torsion une partie de la feuille d'emballage découpée à partir de cette bande, en un bâtonnet relativement raide.

La feuille d'emballage qui entoure le morceau de matière de sucette et forme le bâtonnet, ne doit pas nécessairement être découpée à partir d'une bande. Ces feuilles peuvent par exemple être appliquées déjà avec leurs dimensions définitives sur le morceau de matière de sucette. Cette feuille ne doit d'autre part pas nécessairement être dotée d'un fil pour déchirer plus
facilement cette bande.  Cette feuille peut par exemple
être dotée d'une zone d'affaiblissement, d'une saillie
à tirer, etc...

- 8 -

REVENDICATIONS

1. Procédé pour la fabrication d'une sucette emballée avec bâtonnet (13), suivant lequel on façonne dans une machine de façonnage une certaine quantité de matière de sucette en un morceau (1) de la forme désirée, après quoi on enroule ce morceau (1) dans une feuille d'emballage (12),caractérisé en ce qu'on enroule la feuille d'emballage (12) directement autour du morceau de matière de sucette (1) façonné dans la machine de façonnage, sans bâtonnet, et on façonne par torsion la feuille (12) elle-même en un bâtonnet (13), tandis que l'on applique sur au moins l'un des éléments formés par le morceau de matière de sucette (1) et la feuille d'emballage (12), à l'endroit où la tige (13) formée par la feuille (12) doit venir rencontrer le morceau de matière de sucette (1), un adhésif (3) du genre utilisé pour les sucreries, afin qu'après enlèvement de la partie de la feuille d'emballage (12) qui entoure le morceau (1) au voisinage du bâtonnet (13) façonné, la partie de la feuille (12) qui forme ce bâtonnet (13) restera collée au morceau de matière de sucette (1).

2. Procédé suivant la revendication 1, caractérisé en ce que la partie de la feuille d'emballage (12) façonné par torsion en un bâtonnet (13) est collée de manière à obtenir un bâtonnet (13) relativement rigide.

3. Procédé suivant la revendication 2, caractérisé en ce qu'on utilise comme feuille d'emballage (12), une feuille qui adhère à elle-même au moins partiellement sous l'action de la chaleur et en ce qu'on colle la feuille (12) sous forme d'un bâtonnet (13) en la chauffant.

4. Procédé suivant la revendication 3, caractérisé en ce qu'on utilise comme feuille d'emballage (12), une feuille à base de cellulose.

5. Procédé suivant l'une quelconque des revendications précédentes, caractérisé en ce qu'on découpe la feuille d'emballage (12) à partir d'une bande (4).

6. Procédé suivant les revendications 3 et 5, caractérisé en ce qu'on découpe la feuille d'emballage (12) à partir d'une bande (4) qui comporte une zone centrale transparente (7) et de part et d'autre de celle-ci, une zone colorée (8), et dont au moins les zones colorées (8) collent à elles-mêmes sous l'action de la chaleur.

7. Procédé suivant l'une quelconque des revendications précédentes, caractérisé en ce qu'on utilise une colle au sucre comme adhésif (3).

8. Procédé suivant l'une quelconque des revendications précédentes, caractérisé en ce qu'on dote la feuille d'emballage (12), au moins sur la partie qui doit venir en contact au voisinage de la tige (13) avec le morceau de matière de sucette (1), de moyens (9) destinés à rendre cette feuille (12) facile à déchirer.

9. Procédé suivant la revendication 8, caractérisé en ce que les moyens (9) précités sont formés par un fil (9) au moins partiellement visible, qui est agencé dans la feuille d'emballage (12).

10. Sucette emballée avec bâtonnet, obtenue par le procédé suivant l'une quelconque des revendications précédentes.

Fig.1

Fig. 2

Fig. 3

Fig. 4

Office européen
des brevets

**RAPPORT DE RECHERCHE EUROPEENNE**

Numéro de la demande

EP 80 20 0428

| Catégorie | Citation du document avec indication, en cas de besoin, des parties pertinentes | Revendication concernée | CLASSEMENT DE LA DEMANDE (Int. Cl.⁴) |
|---|---|---|---|
| | US - A - 2 243 375 (G.A. ELLESTAD)<br>* Page 1, colonne 1, lignes 1-5; colonne 2, ligne 12 à page 2, colonne 1, ligne 43; figures 1,2,4,8 *<br>-- | 1,4,5, 8,9,10 | B 65 B 51/00<br>A 23 G 3/00<br>A 23 G 7/00 |
| | US - A - 2 096 611 (G.A. ELLESTAD)<br>* Figures 5,6,7,17 part 49; page 1, colonne 1, lignes 1-11; page 3, colonne 1, lignes 24-30 *<br>-- | 1,2,5, 7,10 | |
| | US - A - 2 830 417 (F.E. ULLMAN et al.)<br>* Figures 17-20 *<br>-- | 1,10 | DOMAINES TECHNIQUES RECHERCHES (Int. Cl.⁴)<br><br>A 23 G 3/00<br>7/00<br>B 65 B 11/54 |
| | LU - A - 49 800 (P. FERRERO)<br>* Figure 1; parts 2,3,4 *<br>-- | 8,9,10 | |
| | US - A - 1 382 383 (A.M. PORTER)<br>* Figure 1, parts 5,7 *<br>-- | 1,10 | |
| A | GB - A - 367 976 (S.M. WHITE) | | CATEGORIE DES DOCUMENTS CITES |
| A | US - A - 1 545 463 (S. DREYER) | | X: particulièrement pertinent |
| A | US - A - 2 872 768 (R. SHEPLER) | | A: arrière-plan technologique<br>O: divulgation non-écrite |
| A | GB - A - 779 748 (HANSEL-JUNIOR) | | P: document intercalaire<br>T: théorie ou principe à la base de l'invention |
| A | FR - A - 1 160 942 (A.R. HARLAND) | | E: demande faisant interférence<br>D: document cité dans la demande |
| A | US - A - 3 112 604 (H.E. DAVIS) | | L: document cité pour d'autres raisons |
| | ./.. | | &: membre de la même famille, document correspondant |

☒ Le présent rapport de recherche a été établi pour toutes les revendications

| Lieu de la recherche | Date d'achèvement de la recherche | Examinateur |
|---|---|---|
| La Haye | 08-07-1980 | GUYON |

OEB Form 1503.1 06.78

**Office européen des brevets**

**RAPPORT DE RECHERCHE EUROPEENNE**

Numéro de la demande

EP 80 20 0428

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | US - A - 2 488 272 (H.E. DAVIS)<br><br>------ | | |
| | | | DOMAINES TECHNIQUES RECHERCHES (Int. Cl. 3) |